# EUROPÄISCHE PATENTSCHRIFT

(11) **EP 1 567 771 B1**
(45) Veröffentlichungstag und Bekanntmachung des Hinweises auf die Patenterteilung: **15.08.2007**
(21) Anmeldenummer: 03785749.7
(22) Anmeldetag: 05.12.2003
(51) Int. Cl.: F04D 27/00, F04D 29/70

(54) **LÜ FTER**
FAN
VENTILATEUR

(30) Priorität: 05.12.2002 DE 10256962
(43) Veröffentlichungstag der Anmeldung: 31.08.2005
(73) Patentinhaber: STEGO-Holding GmbH, 74523 Schwäbisch Hall (DE)
(72) Erfinder: EISENHAUER, Hartmut, 74545 Michelfeld (DE)
(74) Vertreter: Bohnenberger, Johannes
(86) Internationale Anmeldenummer: PCT/EP2003/013773
(87) Internationale Veröffentlichungsnummer: WO 2004/051090

(56) Entgegenhaltungen:
- EP-A- 0 626 519
- DE-A- 10 004 473
- US-A- 4 905 511
- US-A- 5 137 428
- US-A- 5 426 975

## Beschreibung

Die Erfindung betrifft eine Vorrichtung zum Erzeugen eines Luftstroms, insbesondere zum Kühlen oder Erwärmen von elektrischen Bauteilen oder Baugruppen, nach Patentanspruch 1.

Schaltschränke oder dergleichen elektrische und/oder elektronische Bauteile oder Baugruppen enthaltende Einrichtungen, werden in der Regel klimatisiert bzw. aktiv belüftet. Die Wärmeemission der Geräte selbst, aber auch ein ungünstiger Standort des Schaltschranks, beispielsweise in der Nähe Wärme emittierender Maschinen oder in einer für die Bauteile oder Baugruppen zu kühlen Umgebung, erfordern oben beschriebene Zwangsbelüftung, weil sich sonst ein für die Geräte funktionsgefährdendes Klima innerhalb des Schaltschrankes aufbaut.

Die Überwachung des Luftstroms erfolgt üblicherweise durch eine Überwachung der Stromversorgung des Lüfters. Zum einen ist dies schaltungstechnisch relativ aufwändig, zum anderen nicht sehr zuverlässig, da ein Lüfter auch bei korrekter Stromzufuhr, z. B. bei zugesetztem Filter, keinen hinreichenden Luftstrom mehr erzeugen kann.

Aus der DE-A-100 04 473 ist eine Vorrichtung zum Erzeugen eines Luftstroms nach dem Oberbegriff des Patentanspruches 1 bekannt. Der dort vorgesehene Luftstromwächter ist innerhalb des eigentlichen Lüfters, also hinter dem Abdeckgitter im Bereich der Nabe des Lüfterrades angeordnet. Dadurch wird im Wesentlichen der Luftstrom gemessen, der vom Lüfterrad im Bereich der Nabe umlaufend mitgeführt wird. Diese Anordnung ist aufwendig und führt darüber hinaus auch zu Fehlmessungen, da der Luftstromwächter auch dann mit einem Luftstrom beaufschlagt wird, wenn der Lüfter keine Luft fördert.

Der vorliegenden Erfindung liegt die Aufgabe zugrunde, eine Vorrichtung zum Erzeugen eines Luftstroms dahingehend weiterzubilden, dass ein Lüftungsprozess zuverlässig und präzise durchgeführt werden kann.

Diese Aufgabe wird durch eine Vorrichtung nach Patentanspruch 1 gelöst.

Insbesondere wird die Aufgabe durch eine Vorrichtung zur Erzeugung eines Luftstroms, vor allem zum Kühlen oder Erwärmen von elektrischen Bauteilen oder Baugruppen, gelöst, bei welcher, an einem den Lüfter umgebenden und/oder diesem zugehörigen Gehäuseteil, ein integrierter Luftstromwächter vorgesehen und dieser so angeordnet ist, dass er sich im Luftstrom befindet.

Ein wesentlicher Punkt der Erfindung liegt darin, dass durch den Einbau des weiterentwickelten Lüfters der Lüftungsprozess ordnungsgemäß verfolgt werden kann, wobei vorgesehen ist, den Luftstromwächter an einem Abdeckgitter des Lüfters anzuordnen. Dies hat insbesondere den Vorteil, dass der Luftstromwächter auch dann noch eingebaut werden kann, wenn die Lüftervorrichtung bereits eingebaut ist. Da sich Abdeckgitter in der Regel an leicht zugänglichen Stellen befinden, können diese ohne Aufwand gegen Abdeckgitter ausgetauscht werden, die den integrierten Luftstromwächter aufweisen, ohne die eigentlichen Lüftervorrichtung ausbauen zu müssen. Bei sachgemäßer Montage des Abdeckgitters gemäß der vorliegenden Erfindung ist dann das einwandfreie Arbeiten des Lüfters leicht überwachbar. Auch das nachträgliche Anbringen eines externen Luftstromwächters am Abdeckgitter ist unproblematisch, da die **Gitter in der Regel leicht zugänglich sind.**

Eine mögliche Realisierung der Vorrichtung besteht darin, den Luftstromwächter im Wesentlichen in der Ebene des Abdeckgitters anzuordnen. Ist die Installation des Luftstromwächters am Abdeckgitter vorgesehen, ist es vorteilhaft, diesen möglichst wenig über das Abdeckgitter vorstehen zu lassen, damit eine Beschädigung des Luftstromwächters, beispielsweise durch eine äußere Krafteinwirkung, weitestgehend verhindert wird. Das Abdeckgitter schützt somit den Wächter und sichert dessen Funktionsfähigkeit.

Eine erfindungsgemäße Lösung sieht vor, das den Lüfter umgebende und/oder diesem zugehörige Gehäuseteil mit dem Abdeckgitter, das den Luftstromwächter aufnimmt, einstückig zu fertigen. Dies ermöglicht eine weitere Kostensenkung bei der Herstellung des Gehäuseteils und hält den Luftstromwächter auf einfachste Weise dort, wo er den Luftstrom sicher messen kann.

In einer besonderen Ausführungsform ist vorgesehen, den Luftstromwächter an einem Motorgehäuse des Lüfters anzuordnen. Dies hat insbesondere den Vorteil, den Luftstromwächter vollständig geschützt innerhalb der Lüftervorrichtung unterzubringen, beispielsweise an Standorten der zu belüftenden Einrichtung, an denen ein außen angebrachter Luftstromwächter leicht beschädigt werden könnte.

Des Weiteren ist als eine der bevorzugten Ausführungsformen vorgesehen, ein Luftstromwächtergehäuse und das, den Lüfter umgebende und/oder diesem zugehörige und den Luftstromwächter integrierende Gehäuseteil einstückig zu fertigen. Das integrierende Gehäuseteil enthält dann bereits notwendige Halterungen, um die Bauteile des Luftstromwächters aufnehmen zu können. Vorteilhaft dabei sind sowohl die einfache Montage der integrierten Überwachungsvorrichtung als auch die kostengünstige Herstellung des integrierenden Gehäuseteils.

Alternativ dazu kann das oben genannte, integrierende Gehäuseteil mindestens eine Aussparung vorsehen, um einen Luftstromwächter als externes Bauteil aufnehmen zu können. Dies erlaubt eine äußerst kostengünstige Herstellung des integrierenden Gehäuseteils; es wird auf einfachstem Wege eine Möglichkeit geschaffen, die Aufnahme des Luftstromwächters durchzusetzen. Zusätzlich kann die Aussparung am Abdeckgitter mit einem entfernbaren Fingerschutz ausgebildet werden, so dass bei nicht angebrachtem Luftstromwächter die volle Schutzfunktion des Gitters gegeben ist.

In einer besonderen Ausführungsform weist die Aussparung des oben beschriebenen Gehäuseteils einen Aufnahmemechanismus zur Aufnahme des externen Luftstromwächters auf. Der Aufnahmemechanismus kann beispielsweise als Verschraubung vorgesehen sein oder über einen Schnappmechanismus realisiert werden. Dies hat den Vorteil, dass ein etwaiger Luftstromwächter sehr schnell reversibel ein- und ausgebaut werden kann. Er ist damit auch nachträglich einbaubar und kann mühelos entfernt werden, beispielsweise wenn er an anderer Stelle benötigt wird.

Eine erfindungsgemäße Lösung sieht vor, dass der Luftstromwächter auf der blasenden Seite des Ventilators angeordnet ist. In Schaltschränken, insbesondere Datenschränken, sind auf der saugenden Seite der Ventilatoren Filter angebracht, um Staub und dergleichen Verschmutzung aus dem Inneren der Schaltschränke fernzuhalten. Vorzugsweise wird der Luftstromwächter so angeordnet, dass er von der bereits gefilterten Luft angeströmt wird, um so Schmutzpartikel fernzuhalten und damit die Überwachungseinrichtung zu schonen.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine perspektivische Darstellung der erfindungsgemäßen Vorrichtung als Explosionszeichnung, mit einem Luftstromwächter, der an einem Abdeckgitter angeordnet ist;
- Fig. 2: eine Seitenansicht der erfindungsgemäßen Vorrichtung entsprechend der Linie II - II.

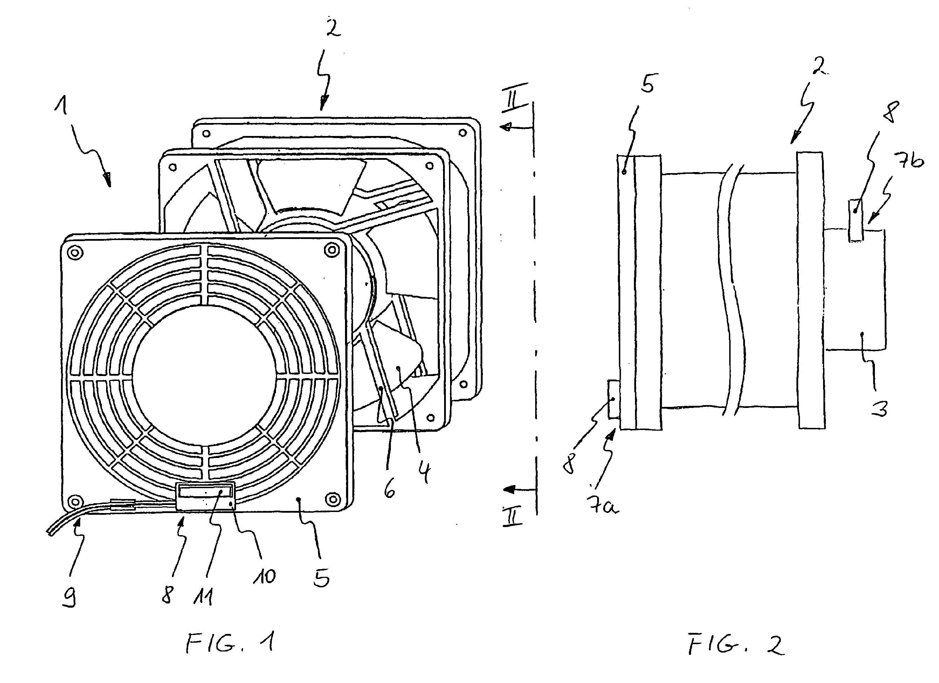

Fig. 1 zeigt eine perspektivische Darstellung der erfindungsgemäßen Vorrichtung 1 als Explosionszeichnung. Dabei ist ein Luftstromwächter 8 an einem Abdeckgitter 5 angeordnet. Möglichkeiten zur Integration des Luftstromwächters 8 werden in Fig. 2 näher verdeutlicht.

An dieser Stelle wird kurz allgemein auf das Prinzip eines Luftstromwächters 8 eingegangen.

Um eine kontinuierliche Lüftung zu gewährleisten, werden Luftstromwächter 8 neben der eigentlichen Lüftungsvorrichtung als Kontrolleinheiten eingesetzt, die den Lüftungsbetrieb anhand der Luftfördermenge bzw. des Luftvolumenstroms überwachen.

Dadurch können beispielsweise defekte Ventilatoren, zugesetzte Filter oder ganz allgemein kritische Lüftungsvorgänge angezeigt werden. Luftstromwächter 8 sind Vorrichtungen, die eine vom zu überwachenden Luftstrom anströmbare Sensoreinrichtung 11 und eine Auswerteeinheit aufweisen. Beispielsweise werden durch die Sensoreinrichtung 11 Strömungsgeschwindigkeit und/oder Durchflussrate des Luftstroms erfasst,
wobei die Auswerteeinrichtung bei kritischen Lüftungsverhältnissen einen Warnmechanismus auslöst. Die Warnung kann z. B. akustisch oder optisch erfolgen.

Der Luftstromwächter 8 kann auf einfachste Weise mit einer drehbar gelagerten, vom Luftstrom anströmbaren Klappe als Sensoreinrichtung 11 ausgebildet sein, die die Strömungsgeschwindigkeit und/oder Durchflussrate des Luftstroms erfasst und durch eine Änderung ihrer Lage ggf. einen Schalter betätigt, wenn die Lageänderung ein kritisches Lüftungsverhältnis beschreibt, wodurch oben genannter Warnmechanismus ausgelöst wird.

In dem hier dargestellten Ausführungsbeispiel ist das Abdeckgitter 5 als eigenständiges Bauteil vorgesehen und daher von einem, den Lüfter 1 umgebenden und/oder diesem zugehörigen Gehäuseteil 2 abhebbar. Das Gehäuseteil 2 könnte mit dem Abdeckgitter 5, das den Luftstromwächter 8 aufnimmt, auch einstückig gefertigt sein, um den Herstellungsprozess zu rationalisieren.

Fig. 2 zeigt eine Seitenansicht der erfindungsgemäßen Vorrichtung 1. Die Zeichnung weist mehrere Möglichkeiten auf, den Luftstromwächter 8 aufzunehmen, obgleich in der Regel nur ein Luftstromwächter in der Vorrichtung 1 vorgesehen ist.

Es wird noch einmal die Möglichkeit aufgezeigt, den Luftstromwächter 8 am Abdeckgitter 5 zu befestigen. Dafür kann das Abdeckgitter 5 eine Aussparung 7a vorsehen. Ist die Seite, z. B. eines Schaltschrankes, die die Lüftervorrichtung aufweist, von außen leicht zugänglich, ist es vorteilhaft, den Luftstromwächter 8 möglichst wenig aus dem Abdeckgitter 5 hervorstehen zu lassen. Dadurch können Stöße oder dergleichen Einwirkungen auf den Luftstromwächter 8 abgemildert werden. Ein integrierendes Gehäuseteil 2 mit Aussparung 7a erleichtert zudem den (ggf. nachträglichen) Einbau des Luftstromwächters 8. Ist der Luftstromwächter 8 nicht an dieser Stelle vorgesehen, kann die Aussparung 7a mit einem zusätzlichen, abnehmbaren Fingerschutz versehen werden, so dass die volle Schutzfunktion des Gitters 5 gewährleistet ist.

Um einen externen Luftstromwächter 8 an der Lüftervorrichtung 1 zu installieren, insbesondere in den oben erwähnten Aussparungen 7a, 7b, müssen diese und/oder der Luftstromwächter 8 einen Aufnahmemechanismus (hier nicht gezeigt) zur Aufnahme des Luftstromwächters 8 aufweisen. Dieser kann beispielsweise als Verschraubung vorgesehen sein, über einen Schnappmechanismus realisiert werden oder jede andere Möglichkeit der Aufnahme des Luftstromwächters 8 bieten.

Des Weiteren ist es möglich, den Luftstromwächter 8 am Motorgehäuse 3 aufzunehmen und so geschützt unterzubringen. Die vorliegende Abbildung zeigt auch hierfür eine Aussparung 7b. Das Anbringen des Luftstromwächters 8 im Inneren der Lüftervorrichtung 1 ist dann vorzuziehen, wenn die zu belüftende Einrichtung an einem Standort aufgestellt ist, an dem ein außen liegender Luftstromwächter 8 leicht zu beschädigen wäre.

Ein Luftstromwächtergehäuse 10 und das, den Lüfter 1 umgebende und/oder diesem zugehörige und den Luftstromwächter 8 integrierende Gehäuseteil 2 könnten auch einstückig gefertigt werden. In diesem Fall weist das integrierende Gehäuseteil 2 bereits notwendige Halterungen auf, um die Bauteile des Luftstromwächters 8 aufzunehmen. Einfache und kostengünstige Herstellung dieser Luftstromwächter-Einheit und die Möglichkeit der schnellen Montage sprechen für dieses Ausführungsbeispiel.

Grundsätzlich ließe sich der Luftstromwächter 8 auch an der Verstrebung 6 des Gehäuseteils anbringen, das das Flügelrad 4 beherbergt. Insbesondere auf der, dem Abdeckgitter 5 zugewandten Seite könnte ein Luftstromwächter 8 leicht zugänglich und trotzdem geschützt untergebracht werden.

Vorzugsweise wird der Luftstromwächter 8 auf der blasenden Seite des Lüfters 1 angeordnet. Dies bietet sich insbesondere dann an, wenn die Lüftervorrichtung 1 zusätzlich mit Filtern (nicht gezeigt) ausgestattet ist, um die zu belüftenden Bauteile zu schützen. Ist auch der Luftstromwächter 8 der gefilterten Luft ausgesetzt, verlängert dies seine Lebensdauer und senkt etwaige Wartungskosten.

Die Gehäusebauteile 2 werden in der Regel aus handelsüblichen Materialien gefertigt, z. B. aus Aluminium-Druckguss oder UL-zugelassenem Polyurethan oder -carbonat.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichenliste

- 1: Vorrichtung zum Erzeugen eines Luftstroms
- 2: Gehäuse
- 3: Motorgehäuse
- 4: Flügelrad
- 5: Abdeckgitter
- 6: Verstrebung
- 7a: Aussparung.
- 7b: Aussparung
- 8: Luftstromwächter
- 9: Leitungen
- 10: Luftstromwächtergehäuse
- 11: Sensorklappe

## Patentansprüche

1. Lüfter (1) zum Erzeugen eines Luftstroms, zum Kühlen oder Erwärmen von elektrischen Bauteilen oder Baugruppen in einem Schaltschrank,
wobei an einem, den Lüfter (1) umgebenden und/oder diesem zugehörigen Gehäuseteil (2, 3, 5) ein integrierter Luftstromwächter (8) vorgesehen und dieser so angeordnet ist, dass er sich im Luftstrom befindet,
und wobei in dem, den Lüfter (1) umgebenden und/oder diesem zugehörigen Gehäuseteil (2, 3, 5) zumindest eine Aussparung (7a, 7b) zur Aufnahme des Luftstromwächters (8) vorgesehen ist.

2. Lüfter nach Anspruch 1,
**dadurch gekennzeichnet, dass**
der Luftstromwächter (8) im Wesentlichen in der Ebene des Abdeckgitters (5) angeordnet ist.

3. Lüfter nach einem der vorhergehenden Ansprüche,
**dadurch gekennzeichnet, dass**
das den Lüfter (1) umgebende und/oder diesem zugehörige Gehäuseteil (2) und das den Luftstromwächter (8) integrierende Abdeckgitter (5) einstückig gefertigt sind.

4. Lüfter nach Anspruch 1,
**dadurch gekennzeichnet,dass**
der Luftstromwächter (8) an einem Motorgehäuse (3) angeordnet ist.

5. Lüfter nach einem der vorhergehenden Ansprüche,
**dadurch gekennzeichnet, dass**
ein Luftstromwächtergehäuse (10) und das, den Lüfter (1) umgebende und/oder diesem zugehörige und den Luftstromwächter (8) integrierende Gehäuseteil (2) einstückig gefertigt sind.

6. Lüfter nach nach einem der vorhergehenden Ansprüche,
**dadurch gekennzeichnet, dass**
in dem, den Lüfter (1) umgebenden und/oder diesem zugehörigen Gehäuseteil (2) zumindest eine Aussparung (7a, 7b) zur Aufnahme des Luftstromwächters (8) vorgesehen ist.

7. Lüfter nach Anspruch 6,
**dadurch gekennzeichnet,dass**
in der mindestens einen Aussparung (7a, 7b) ein Aufnahmemechanismus zur Aufnahme des Luftstromwächters (8) vorgesehen ist.

8. Lüfter nach einem der vorhergehenden Ansprüche,
**dadurch gekennzeichnet,dass**
der Luftstromwächter (8) auf der blasenden Seite des Lüfters (1) angeordnet ist.

## Claims

1. Fan (1) for generating a current of air, for cooling or heating electrical components or subassemblies in a control cabinet, wherein on one housing part (2, 3, 5) enclosing the fan (1) and/or associated with the latter an integrated air current monitor (8) is provided and this is arranged in such a way that it is situated within the air current; and wherein at least one recess (7a, 7b) is provided in the housing part (2, 3, 5) enclosing the fan (1) and/or associated with the latter, to accommodate the air current monitor (8).

2. Fan according to Claim 1,
**characterised in that**
the air current monitor (8) is arranged substantially in the plane of the cover grid (5).

3. Fan according to one of the previous claims,
**characterised in that**
the housing part (2) enclosing the fan (1) and/or associated with the latter and the cover grid (5) integrating the air current monitor (8) are manufactured in one piece.

4. Fan according to Claim 1,
**characterised in that**
the air current monitor (8) is arranged on a motor housing (3).

5. Fan according to one of the previous claims,
**characterised in that**
an air current monitor housing (10) and the housing part (2) enclosing the fan (1) and/or associated with the latter and integrating the air current monitor (8) are manufactured in one piece.

6. Fan according to one of the previous claims,
**characterised in that**
at least one recess (7a, 7b) is provided in the housing part (2) enclosing the fan (1) and/or associated with the latter, to accommodate the air current monitor (8).

7. Fan according to Claim 6,
**characterised in that**
a retaining mechanism to accommodate the air current monitor (8) is provided in the at least one recess (7a, 7b).

8. Fan according to one of the previous claims,
**characterised in that**
the air current monitor (8) is arranged on the blowing side of the fan (1).

## Revendications

1. Ventilateur (1) destiné à produire un écoulement d'air, pour refroidir ou réchauffer des composants ou des blocs électriques dans une armoire de commande,
un contrôleur de débit d'air (8) intégré étant prévu au niveau d'une pièce de boîtier (2, 3, 5) entourant le ventilateur (1) et/ou associée à ce dernier, et le contrôleur étant disposé de telle sorte qu'il se situe dans l'écoulement d'air,
et au moins un évidement (7a, 7b) destiné à recevoir le contrôleur de débit d'air (8) étant prévu dans la pièce de boîtier (2, 3, 5) entourant le ventilateur (1) et/ou associée à ce dernier.

2. Ventilateur selon la revendication 1,
**caractérisé en ce**
**que** le contrôleur de débit d'air (8) est disposé essentiellement au niveau de la grille de recouvrement (5).

3. Ventilateur selon l'une quelconque des revendications précédentes,
**caractérisé en ce**
**que** la pièce de boîtier (2) entourant le ventilateur (1) et/ou associée à celui-ci et la grille de recouvrement (5) intégrant le contrôleur de débit d'air (8) sont fabriquées d'un seul tenant.

4. Ventilateur selon la revendication 1,
**caractérisé en ce**
**que** le contrôleur de débit d'air (8) est disposé sur un bâti de moteur (3).

5. Ventilateur selon l'une quelconque des revendications précédentes,
**caractérisé en ce**
**qu'**un boîtier de contrôleur de débit d'air (10) et la pièce de boîtier (2) intégrant le contrôleur de débit d'air (8) et entourant le ventilateur (1) et/ou associée à celui-ci sont réalisés d'un seul tenant.

6. Ventilateur selon l'une quelconque des revendications précédentes,
**caractérisé en ce**
**qu'**au moins un évidement (7a, 7b) destiné à recevoir le contrôleur de débit d'air (8) est prévu dans la pièce de boîtier (2) entourant le ventilateur (1) et/ou associée à celui-ci.

7. Ventilateur selon la revendication 6,
**caractérisé en ce**
**qu'**un mécanisme de réception permettant de recevoir le contrôleur de débit d'air (8) est prévu dans l'évidement (7a, 7b) au moins au nombre de un.

8. Ventilateur selon l'une quelconque des revendications précédentes,
**caractérisé en ce**
**que** le contrôleur de débit d'air (8) est disposé sur le côté soufflant du ventilateur (1).
